# EUROPEAN PATENT SPECIFICATION

(11) **EP 1 404 001 B1**
(45) Date of publication and mention of the grant of the patent: **23.11.2005**
(21) Application number: 02021434.2
(22) Date of filing: 25.09.2002
(51) Int. Cl.: H02K 1/14, H02K 5/16, H02K 21/22

(54) **Stator for a brushless DC motor**
Ständer für einen bürstenlosen Gleichstrommotor
Stator pour un motor à courant continu sans balais

(43) Date of publication of application: 31.03.2004
(73) Proprietor: Sunonwealth Electric Machine Industry Co., Ltd., Kaohsiung, Taiwan R.O.C. (TW)
(72) Inventor: Horng, Alex, Lingya District Kaohsiung (TW); Hong, Yin-Rong, Lingya District Kaohsiung (TW); Hong, Ching-Shen, Lingya District Kaohsiung (TW)
(74) Representative: LOUIS, PÖHLAU, LOHRENTZ

(56) References cited:
- EP-A- 0 613 229
- DE-U- 29 814 964
- US-A1- 2002 117 932
- US-B1- 6 320 291

## Description

### Background of the Invention

### 1. Field of the Invention

The present invention is related to a stator structure for a brushless dc motor and more particularly to a singular magnetic-conductive plate comprising a main pole plate, an axial hole, and a plurality of pole faces integrated into a singular member to thereby reduce count of motor members, so that the entire thickness of the stator is reduced and the entire structure is simplified.

### 2. Description of the Related Art

Most of traditional fans have many members, such as a stator seat, an axial tube, a coil, a pole plate, and a printed circuit board etc. However, the total thickness of the traditional fan cannot be effectively reduced and it is undesired for an electronic device with a specific thin thickness, notebook computer for example.

U.S. Patent No. 5,093,599, issued to HORNG on Mar. 3, 1992, as shown in FIG. 1, discloses a brushless dc motor. The motor 1 mainly includes a stator seat 2, an upper pole plate 3, a lower pole plate 4, an axial tube 5, and a printed circuit board 6. The upper pole plate 3, the lower pole plate 4, and the printed circuit board 6 are stacked on either side of the axial tube 5 by means of connection of the axial tube 5 when assembled. Consequently, the stacked combination of the stator members must increase their axial thickness.

The stator remains a specific thickness, although the stator members are reduced their element thickness. In reduction of stator members, the thickness of the stator cannot reduce if the count of the stator members had fixed. However, the thickness of the stator is reduced when a plurality of stator members is integrated into a single member.

EP613229 and US2002/0117932 describe similar brushless motors.

The present invention intends to provide a stator structure for brushless dc motor comprising a singular magnetic-conductive plate consisted of a main pole plate, an axial hole, and pole faces adapted to replace a plurality of stator members in such a way to mitigate and overcome the above problem.

### Summary of the Invention

The primary objective of this invention is to provide a stator structure for a brushless dc motor comprising a single magnetic-conductive plate including a main pole plate adapted to be a base receiving a coil, so as to simplifying the entire structure of the stator structure and reducing the count of the stator members.

The secondary objective of this invention is to provide the stator structure for the brushless dc motor comprising a singular magnetic-conductive plate consisted of a main pole plate, an axial hole, and pole faces adapted to replace a plurality of stator members, so as to simplifying the entire structure of the stator structure and reducing the count of the stator members.

The stator structure for the brushless dc motor of the present invention mainly comprises a single magnetic-conductive plate, a coil, and a driver member. The single magnetic-conductive plate includes a main pole plate, an axial hole, and a plurality of pole faces. The main pole plate is adapted to be a base combined with the coil and the drive member, and defined the axial hole on its center. The edge of the axial hole is projected to form an axial tube. The pole faces are spaced apart equidistant round the axial hole and adjacent to the coil. The single magnetic-conductive plate further includes at least one assembling hole.

Another aspect of the present invention is each of the pole face comprising an inclined edge to thereby generate irregular magnetic field for easily start.

Another aspect of the present invention is a set of the pole faces comprising inner pole faces and outer pole faces to thereby form multiple pole layers for increasing design choice.

Another aspect of the present invention is the pole face being bent to form axial pole faces aligned with a permanent magnet of a stator between which to form an axial gap.

Other objectives, advantages and novel features of the invention will become more apparent from the following detailed description and the accompanying drawings.

### Brief Description of the Drawings

The present invention will now be described in detail with reference to the accompanying drawings herein:
FIG. 1 is a perspective view of a conventional brushless dc motor in accordance with U.S. Patent No. 5,093,599;
FIG. 2 is a perspective view of a stator structure and a rotor in accordance with a first embodiment of the present invention;
FIG. 3 is a sectional view, taken along line 3-3 in FIG. 2, of the stator structure in accordance with the first embodiment of the present invention;
FIG. 4 is a perspective view of a stator structure and a rotor in accordance with a second embodiment of the present invention;
FIG. 5 is sectional view, taken along line 5-5 in FIG. 4, of the stator structure in accordance with the second embodiment of the present invention;
FIG. 6 is a perspective view of a single magnetic-conductive plate of a stator in accordance with a third embodiment of the present invention;
FIG. 7 is a perspective view of a single magnetic-conductive plate of a stator in accordance with a fourth embodiment of the present invention;
FIG. 8 is a perspective view of a single magnetic-conductive plate of a stator in accordance with a fifth embodiment of the present invention;
FIG. 9 is a perspective view of a single magnetic-conductive plate of a stator in accordance with a sixth embodiment of the present invention;
FIG. 10 is a perspective view of a stator structure and a rotor in accordance with a seventh embodiment of the present invention; and
FIG. 11 is sectional view, taken along line 11-11 in FIG. 10, of the stator structure in accordance with the seventh embodiment of the present invention.

### Detailed Description of the Invention

Referring now to the drawings, there are seven embodiments of the present invention shown therein, all of which include generally a primary stator member and a secondary rotor member.

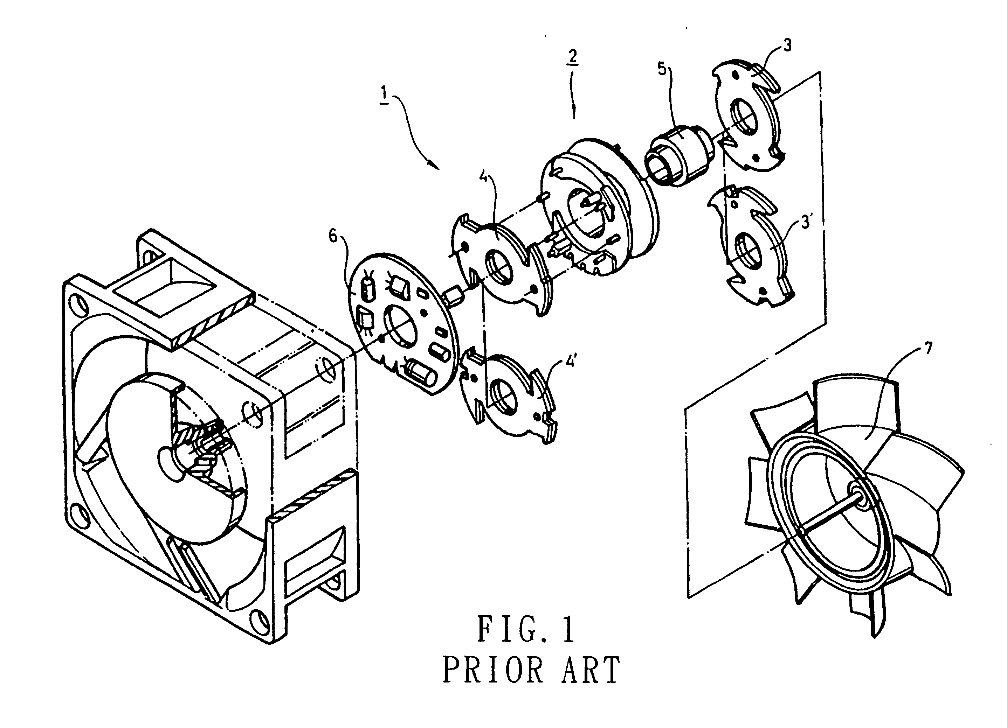

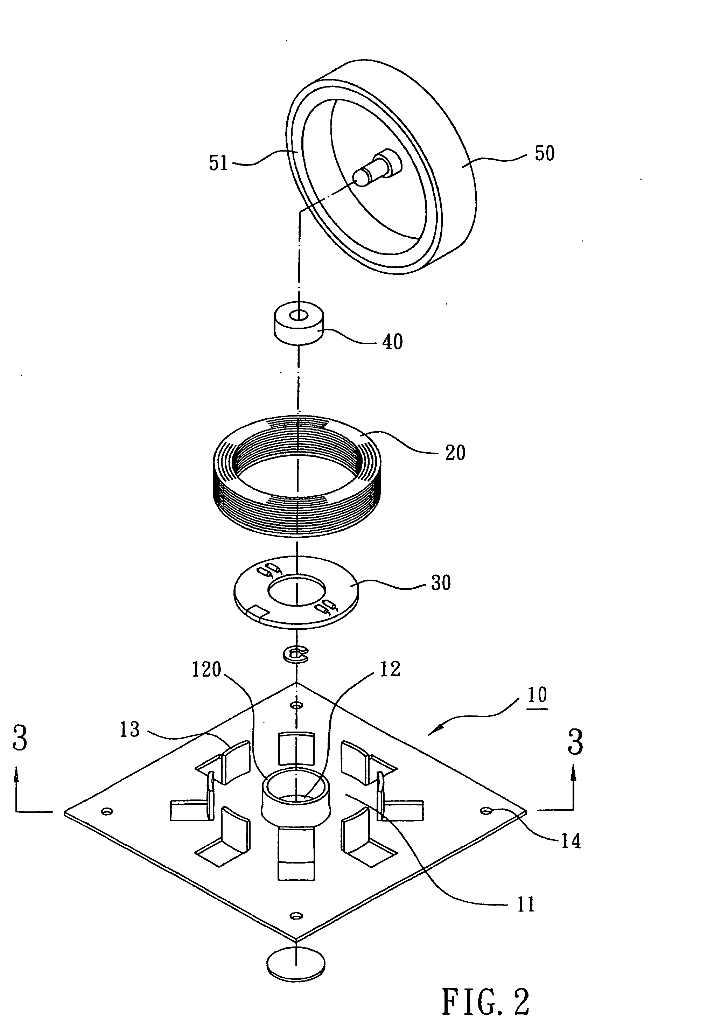

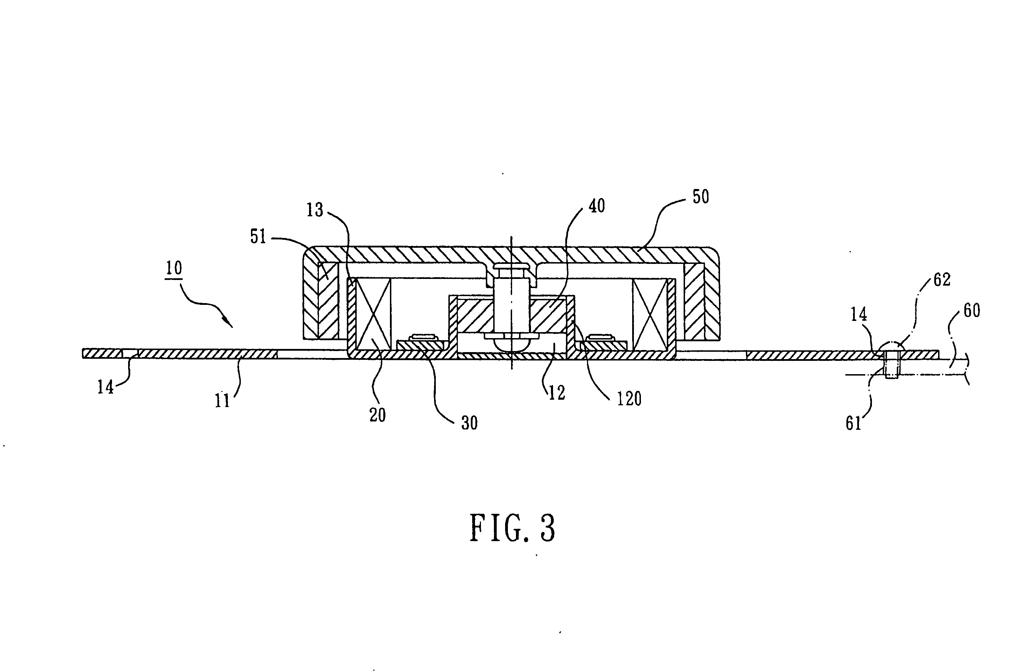

Referring initially to FIGS. 2 and 3, a stator structure in accordance with the first embodiment of the present invention generally includes a single magnetic-conductive plate designated as numeral 10, a coil designated as numeral 20, a driver designated as numeral 30, and a bearing designated as numeral 40. The axial assembly of the single magnetic-conductive plate 10, the coil 20, the driver member 30, and the bearing 40 is combined with a rotor 50 to form a motor.

Construction of the single magnetic-conductive plate 10 shall be described in detail, referring now to FIGS. 2 and 3. The single magnetic-conductive plate 10 is made of a punched metal plate. The singular magnetic-conductive plate 10 comprises a main pole plate portion 11, an axial hole 12, a plurality of pole faces 13, and at least one assembling hole 14.

Assembling the stator shall now be described with reference to FIG. 3. The main pole plate portion 11 is adapted to be a base combined with the coil 20 and the drive member 30, and defined the axial hole 12 on its center. An axial tube 120 is projected from the edge of the axial hole 12, which is used to receive a shaft of the rotor 50. Preferably, the pole faces 13 are spaced apart equidistant on a common circle round the axial hole 12 and adjacent to the coil 20. In assembling, the base of the main pole plate portion 11 accommodates the coil 20 and the driver member 30 while the axial tube 120 accommodating the bearing 40. The outer periphery of the single magnetic-conductive plate 10 further includes at least one assembling hole 14 formed at the outer periphery of the main pole plate portion 11 to thereby assemble the motor at a predetermined position.

Referring again to FIG. 3, when the single magnetic-conductive plate 10, the coil 20, the driver member 30, and the bearing 40 are nested in assembled relationship within the rotor 50, radial air gaps are formed between the pole faces 13 and a permanent magnet 51. The pole faces 13 may generate alternative magnetic field to thereby rotate the rotor 50 while the coil 20 proximal the inner surfaces of the pole faces 13 are energized to generate alternative magnetic field by the driver member 30.

In installing, the motor is combined with a predetermined position of a plate 60 by means of the assembling hole 14 being connected to a screw hole 61 of the plate 60 by a screw 62.

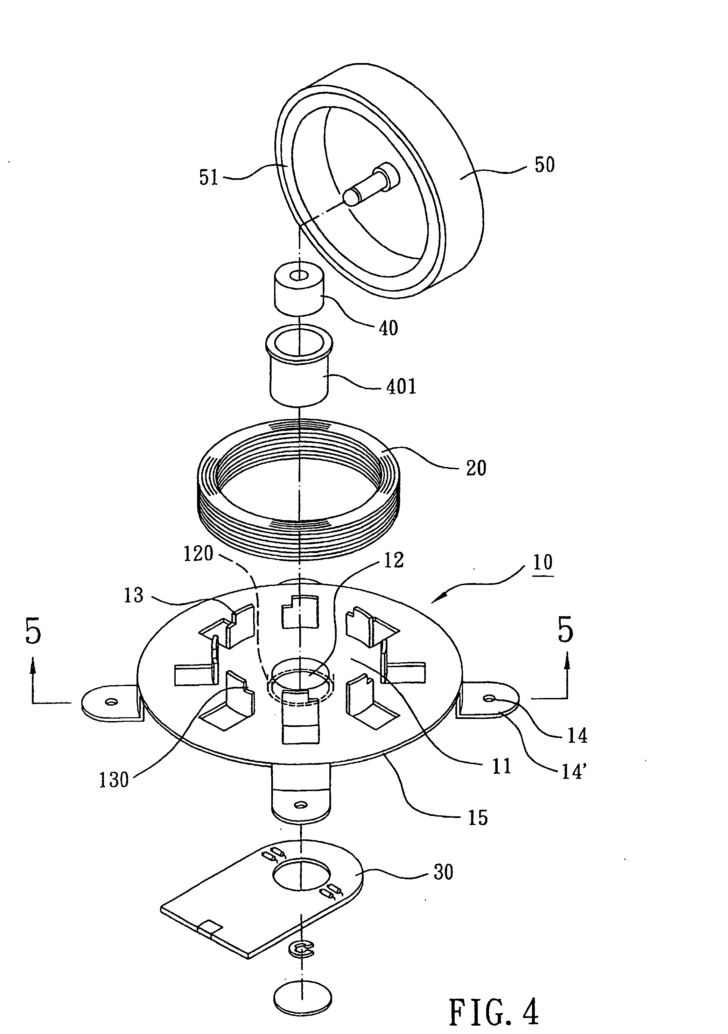

Referring to FIGS. 4 through 11, reference numerals of a second through seventh embodiments have applied the identical numerals of the first embodiment. Single magnetic-conductive plates of the second through seventh embodiments have the similar configuration and same function as the first embodiment and the detailed descriptions are omitted.

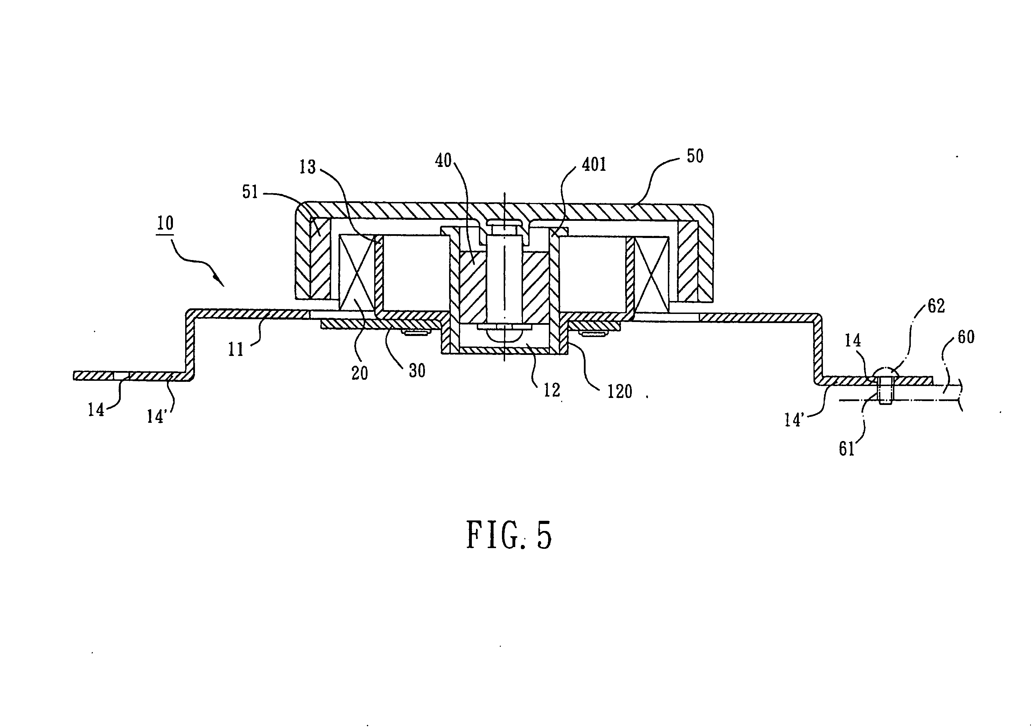

Referring to FIGS. 4 and 5, a single magnetic-conductive plate 10 in accordance with the second embodiment of the present invention comprises a main pole plate portion 11, an axial hole 12, a plurality of pole faces 13, at least one assembling hole 14, and a plurality of cut outer edges 15. The cut outer edges 15 are arranged in symmetrical manner to thereby maintain the entire structural symmetry of the single magnetic-conductive plate 10. Each assembling hole 14 is formed on a lug 14' projected between the two cut outer edges 15. An axial tube 120 is projected from the edge of the axial hole 12, which is used to receive a metal tube 401 of the bearing 40 for combing with a shaft of the rotor 50. The coil 20 is positioned proximate the outer surfaces of the pole faces 13 the front surface of the main pole plate portion 11 while the driver member 30 is combined with the rear surface of the main pole plate portion 11. In addition, a neck portion 130 is formed on each of the pole faces 13 to generate an irregular magnetic field for easy start while the pole faces 13 are actuated to rotate the rotor 50.

Referring again to FIG. 5, he coil 20 is positioned on the front surface of the main pole plate portion 11 while the driver member 30 is combined with the rear surface of the main pole plate portion 11. In installing, the motor is combined with a predetermined position of a plate 60 by means of the assembling hole 14 being connected to a screw hole 61 of the plate 60 by a screw 62.

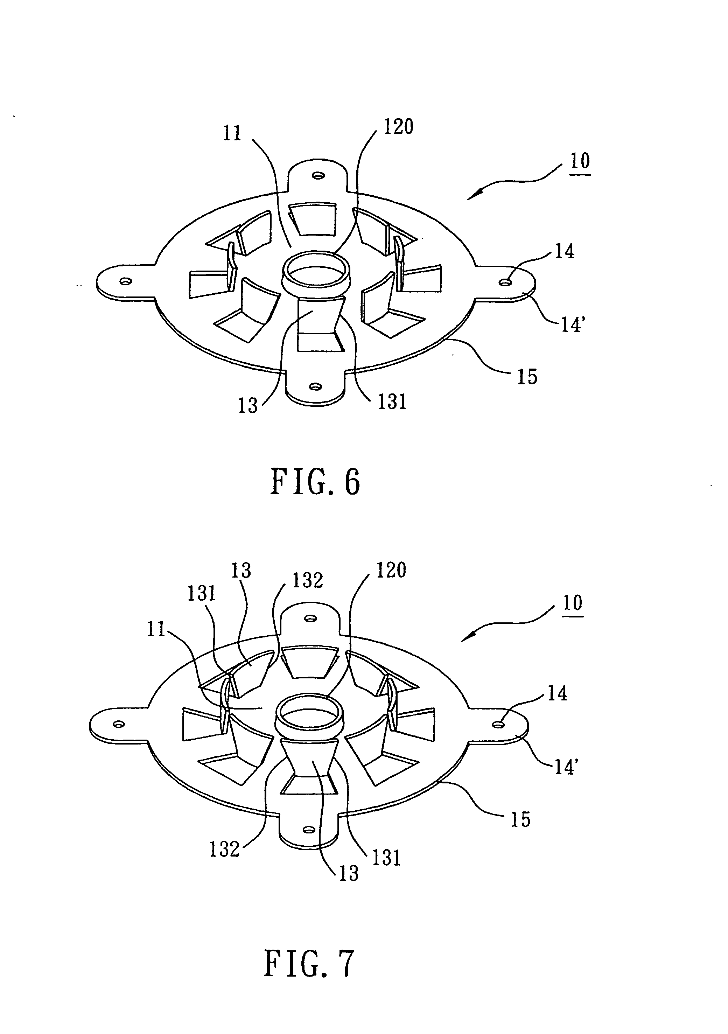

Referring to FIG. 6, a single magnetic-conductive plate 10 in accordance with the third embodiment of the present invention comprises a main pole plate portion 11, an axial tube 120, a plurality of pole faces 13, at least one assembling hole 14, and a plurality of cut outer edges 15. Each of the pole faces 13 has a first inclined edge 131 with an appropriate inclination with respect to a second edge. Consequently, the pole face 13 with the first inclined edge 131 is adapted to generate an irregular magnetic field for easy start while the pole faces 13 are actuated to rotate the rotor 50.

Referring to FIG. 7, a single magnetic-conductive plate 10 in accordance with the fourth embodiment of the present invention comprises a main pole plate portion 11, an axial tube 120, a plurality of pole faces 13, at least one assembling hole 14, and a plurality of cut outer edges 15. Each of the pole faces 13 has a first inclination of an inclined first edge 131 and a second inclination of a second inclined edge 132 to thereby increase induced area of the pole face 13. Preferably, the first inclination of the first inclined edge 131 is greater than that of the second inclined edge 132. Consequently, the pole face 13 with the inclined edges 130 and 132 is adapted to generate an irregular magnetic field for easy start while the pole faces 13 are actuated to rotate the rotor 50.

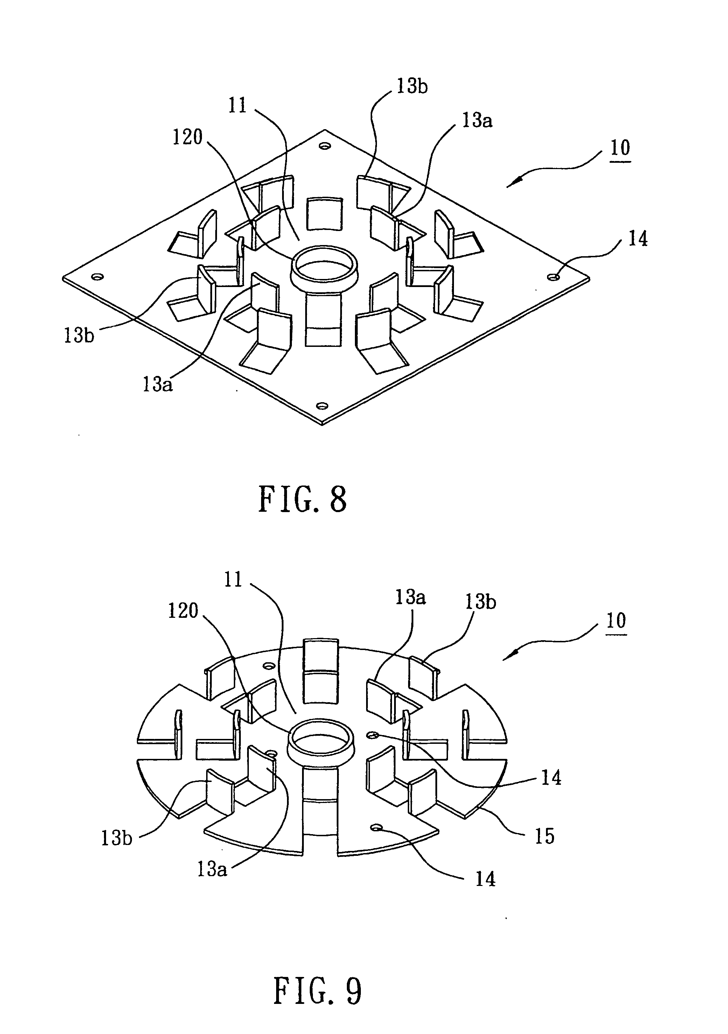

Referring to FIG. 8, a single magnetic-conductive plate 10 in accordance with the fifth embodiment of the present invention comprises a main pole plate portion 11, an axial tube 120, a plurality of inner pole faces 13a, a plurality of outer pole faces 13b, and at least one assembling hole 14. The inner pole faces 13a and outer pole faces 13b are spaced apart equidistant on two concentric circles round the axial tube 120 and arranged in a staggered manner. Consequently, the pole faces 13a and 13b are performed multiple pole-face layers, so that the design choice of the stator is increased.

Referring to FIG. 9, a single magnetic-conductive plate 10 in accordance with the sixth embodiment of the present invention comprises a main pole plate portion 11, an axial tube 120, a plurality of inner pole faces 13a, a plurality of outer pole faces 13b, and at least one assembling hole 14. The inner pole faces 13a and outer pole faces 13b are spaced apart equidistant on two concentric circles round the axial tube 120 and each of the inner pole faces 13a are aligned with the associated outer pole face 13b on a common radial line. Consequently, the pole faces 13a and 13b are performed multiple pole-face layers, so that the design choice of the stator is increased.

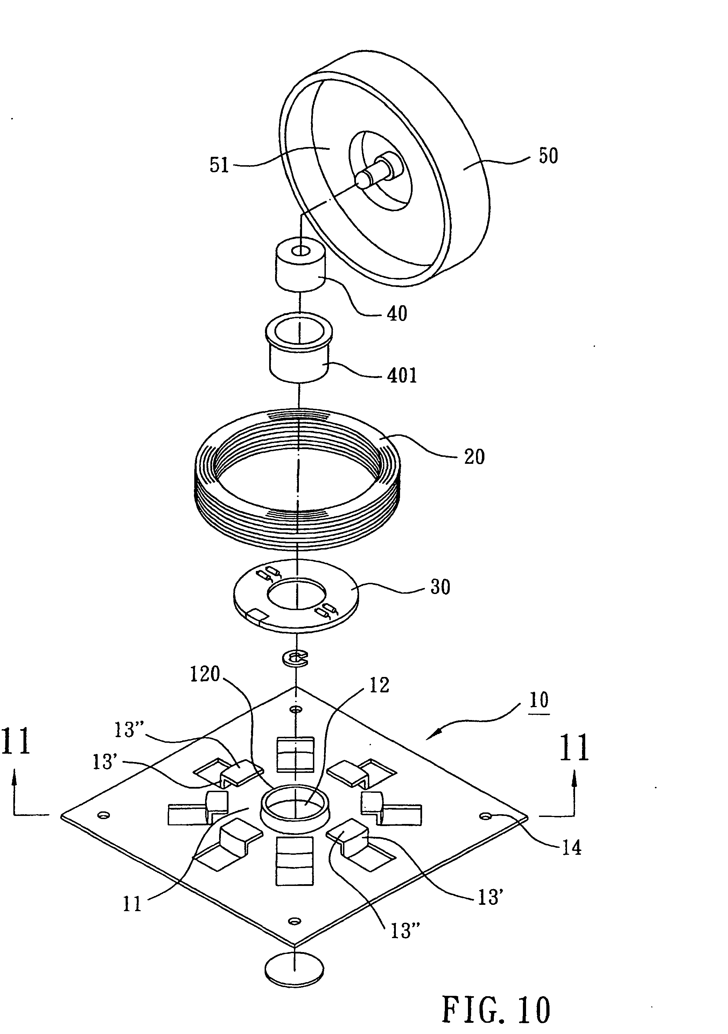

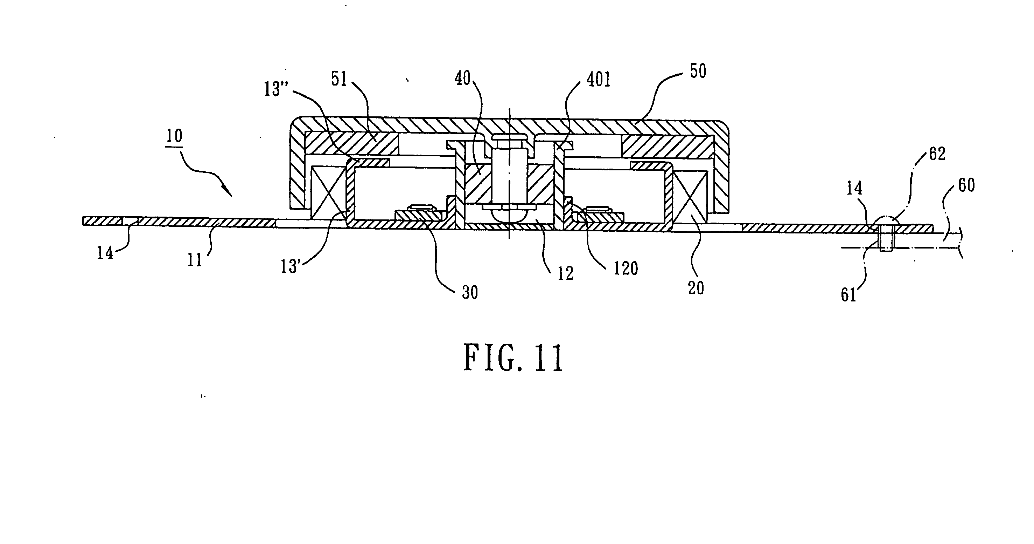

Referring to FIGS. 10 and 11, a single magnetic-conductive plate 10 in accordance with the seventh embodiment of the present invention comprises a main pole plate portion 11, an axial tube 120, a plurality of pole arms 13', a plurality of axial pole faces 13", and at least one assembling hole 14. The single magnetic-conductive plate 10 is adapted to generate radial magnetic field so that it is applied to an axial air gap motor of the seventh embodiment in addition to the radial air gap motor of the first through sixth embodiments. Each of the pole faces 13" is bent perpendicular to the pole arm 13' so as to face an axial permanent magnet 51 of a rotor 50 that is induced with an axial magnetic field generated by the pole faces 13" of the stator.

Although the invention has been described in detail with reference to its presently preferred embodiment, it will be understood by one of ordinary skill in the art that various modifications can be made without departing from the scope of the invention, as set forth in the appended claims.

## Claims

1. A stator structure for a brushless dc motor, comprising:
- a single magnetic-conductive plate (10) made of a punched metal plate and having first and second major surfaces, the first surface including a main pole plate portion (11), and a plurality of poles (13) formed on said first major surface, each pole is formed to extend from the first major surface by punching a portion of the plate (10) out of the plane thereof, and has respective inner and outer faces disposed along an outer periphery of the main pole plate portion (11);
- a coil (20) positioned at an annular outer periphery of the single magnetic-conductive plate (10); and
- a driver member (30) attached to the single magnetic-conductive plate (10); wherein the coil (20) and the driver member (30) are attached to the first major surface of the single magnetic-conductive plate (10) to thereby reduce the overall thickness of the stator structure.

2. The stator structure for a brushless dc motor as defined in Claim 1, wherein the single magnetic-conductive plate (10) further comprises at least one assembling hole (14) to fix the single magnetic-conductive plate (10) to a plate (60).

3. The stator structure for a brushless dc motor as defined in Claim 1, wherein the main pole plate portion (11) of the single magnetic-conductive plate (10) further comprises at least one assembling hole (14) to fix the single magnetic-conductive plate (10) to a plate (60).

4. The stator structure for a brushless dc motor as defined in Claim 1, wherein the main pole plate portion (11) of the single magnetic-conductive plate (10) further comprises an axial hole (12) to connect to a metal tube (401) to thereby assemble a rotor (50).

5. The stator structure for a brushless dc motor as defined in Claim 4, wherein the axial hole (12) comprises an inner periphery from which an axial tube (120) is projected, the axial tube (120) to accommodate a bearing (40) to thereby allow rotation of the rotor (50).

6. The stator structure for a brushless dc motor as defined in Claim 1, wherein the single magnetic-conductive plate (10) further comprises a plurality of cut outer edges (15) defined on an annular outer edge in place to thereby increase entire structural symmetry of the outer periphery of the single magnetic-conductive plate (10).

7. The stator structure for a brushless dc motor as defined in Claim 1, wherein each of the poles (13) is formed a reduced neck portion (130) to thereby generate an irregular magnetic field for easy start.

8. The stator structure for a brushless dc motor as defined in Claim 1, wherein each of the poles (13) has a first inclined edge (131) with an inclination with respect to a second edge, the pole (13) with the first inclined edge (131) is to generate an irregular magnetic field for easy start.

9. The stator structure for a brushless dc motor as defined in Claim 8, wherein the second edge is a second inclined edge (132) to increase total induced area of the poles (13).

10. The stator structure for a brushless dc motor as defined in Claim 1, wherein the poles (13) comprise a plurality of inner poles (13a) and a plurality of outer poles (13b) which are spaced apart equidistant on two associated concentric circles.

11. The stator structure for a brushless dc motor as defined in Claim 10, wherein the inner and outer poles (13a, 13b) are arranged in a staggered manner.

12. The stator structure for a brushless dc motor as defined in Claim 10, wherein each of the inner poles (13a) are aligned with the associated outer poles (13b) on a common radial line.

13. The stator structure for a brushless dc motor as defined in Claim 1, wherein the pole (13) is an axial pole face (13") which is bent perpendicular to an associated pole arm (13') so as to face an axial permanent magnet (51) of a rotor (50) that is induced with an axial magnetic field generated by the poles (13") of the stator to generate a repulsive force for driving the rotor 50.

14. The stator structure for a brushless dc motor as defined in Claim 1, wherein the coil (20) is positioned at inside periphery of the outer faces of the poles (13).

15. The stator structure for a brushless dc motor as defined in Claim 1, wherein the coil (20) is positioned at outside periphery of the outer faces of the poles (13).

## Patentansprüche

1. Statorstruktur für einen bürstenlosen Gleichstrommotor, die umfasst:
- eine einzige magnetisch leitende Platte (10), die aus einer gestanzten Metallplatte hergestellt ist und eine erste und eine zweite Hauptoberfläche besitzt, wobei die erste Oberfläche einen Haupt-Polplattenabschnitt (11) und mehrere auf der ersten Hauptoberfläche ausgebildete Pole (13) aufweist, wobei jeder Pol so geformt ist, dass er sich von der ersten Hauptoberfläche erstreckt, indem ein Abschnitt der Platte (10) aus ihrer Ebene ausgestanzt ist, und eine innere bzw. äußere Fläche besitzt, die längs eines äußeren Umfangs des Haupt-Polplattenabschnitts (11) angeordnet sind;
- eine Spule (20), die an einem ringförmigen äußeren Umfang der einzigen magnetisch leitenden Platte (10) positioniert ist; und
- ein Antriebselement (30), das an der einzigen magnetisch leitenden Platte (10) befestigt ist;
wobei die Spule (20) und das Antriebselement (30) an der ersten Hauptoberfläche der einzigen magnetisch leitenden Platte (10) befestigt sind, um dadurch die Gesamtdicke der Statorstruktur zu verringern.

2. Statorstruktur für einen bürstenlosen Gleichstrommotor nach Anspruch 1, bei der die einzige magnetisch leitende Platte (10) ferner wenigstens ein Montageloch (14) umfasst, um die einzige magnetisch leitende Platte (10) an einer Platte (60) zu befestigen.

3. Statorstruktur für einen bürstenlosen Gleichstrommotor nach Anspruch 1, bei der der Haupt-Polplattenabschnitt (11) der einzigen magnetisch leitenden Platte (10) ferner wenigstens ein Montageloch (14) aufweist, um die einzige magnetisch leitende Platte (10) an einer Platte (60) zu befestigen.

4. Statorstruktur für einen bürstenlosen Gleichstrommotor nach Anspruch 1, bei der der Haupt-Polplattenabschnitt (11) der einzigen magnetischen leitenden Platte (10) ferner ein axiales Loch (12) aufweist, um sie mit einem Metallrohr (401) zu verbinden, um dadurch einen Rotor (50) zu montieren.

5. Statorstruktur für einen bürstenlosen Gleichstrommotor nach Anspruch 4, bei der das axiale Loch (12) eine innere Umfangsfläche aufweist, von der ein axiales Rohr (120) vorsteht, wobei das axiale Rohr (120) ein Lager (40) aufnimmt, um dadurch eine Drehung des Rotors (50) zu ermöglichen.

6. Statorstruktur für einen bürstenlosen Gleichstrommotor nach Anspruch 1, bei der die einzige magnetisch leitende Platte (10) ferner mehrere eingeschnittene Außenkanten (15) aufweist, die am Ort einer ringförmigen Außenkante definiert sind, um dadurch die gesamte strukturelle Symmetrie des äußeren Umfangs der einzigen magnetisch leitenden Platte (10) zu erhöhen.

7. Statorstruktur für einen bürstenlosen Gleichstrommotor nach Anspruch 1, bei der jeder der Pole (13) mit einem verkleinerten Halsabschnitt (130) ausgebildet ist, um dadurch ein unregelmäßiges Magnetfeld für einen einfachen Start zu erzeugen.

8. Statorstruktur für einen bürstenlosen Gleichstrommotor nach Anspruch 1, bei der jeder der Pole (13) eine erste geneigte Kante (131), die in Bezug auf eine zweite Kante eine Neigung aufweist, besitzt, wobei der Pol (13) mit der ersten geneigten Kante (131) dazu dient, ein unregelmäßiges Magnetfeld für einen einfachen Start zu erzeugen.

9. Statorstruktur für einen bürstenlosen Gleichstrommotor nach Anspruch 8, bei der die zweite Kante eine zweite geneigte Kante (132) ist, um die gesamte Induktionsfläche der Pole (13) zu erhöhen.

10. Statorstruktur für einen bürstenlosen Gleichstrommotor nach Anspruch 1, bei der die Pole (13) mehrere innere Pole (13a) und mehrere äußere Pole (13b) umfassen, die an zwei zugeordneten konzentrischen Kreisen um die gleiche Strecke beabstandet sind.

11. Statorstruktur für einen bürstenlosen Gleichstrommotor nach Anspruch 10, bei der die inneren und äußeren Pole (13a, 13b) versetzt angeordnet sind.

12. Statorstruktur für einen bürstenlosen Gleichstrommotor nach Anspruch 10, bei der jeder der inneren Pole (13a) auf einer gemeinsamen radialen Linie auf den jeweils zugeordneten äußeren Pol (13b) ausgerichtet ist.

13. Statorstruktur für einen bürstenlosen Gleichstrommotor nach Anspruch 1, bei der der Pol (13) eine axiale Polfläche (13") ist, die senkrecht zu einem zugeordneten Polarm (13') gebogen ist, und so einem axialen Permanentmagneten (51) eines Rotors (50) zugewandt ist, in dem ein axiales Magnetfeld induziert wird, das durch die Pole (13") des Stators erzeugt wird, um eine abstoßende Kraft zu erzeugen, um den Rotor (50) anzutreiben.

14. Statorstruktur für einen bürstenlosen Gleichstrommotor nach Anspruch 1, bei der die Spule (20) an einer inneren Umfangsfläche der äußeren Flächen der Pole (13) positioniert ist.

15. Statorstruktur für einen bürstenlosen Gleichstrommotor nach Anspruch 1, bei der die Spule (20) an einer äußeren Umfangsfläche der äußeren Flächen der Pole (13) positioniert ist.

## Revendications

1. Structure de stator pour un moteur à courant continu sans balais, comprenant :
- une unique plaque conductrice magnétique (10) constituée d'une plaque métallique perforée et présentant des première et deuxième surfaces principales, la première surface comprenant une partie de plaque polaire principale (11), et une pluralité de pôles (13) formée sur ladite première surface principale, chaque pôle étant réalisé de façon à s'étendre depuis la première surface principale en perforant une partie de la plaque (10) vers l'extérieur du plan de celle-ci, et présentant des faces interne et externe respectives disposées le long d'une périphérie extérieure de la partie de plaque polaire principale (11) ;
- une bobine (20) disposée au niveau d'une périphérie extérieure annulaire de l'unique plaque conductrice magnétique (10) ; et
- un élément conducteur (30) fixé à l'unique plaque conductrice magnétique (10) ; dans laquelle la bobine (20) et l'élément conducteur (30) sont fixés sur la première surface principale de l'unique plaque conductrice magnétique (10) de façon à réduire ainsi l'épaisseur globale de la structure de stator.

2. Structure de stator pour un moteur à courant continu sans balais selon la revendication 1, dans laquelle l'unique plaque conductrice magnétique (10) comprend en outre au moins un trou de montage (14) pour fixer l'unique plaque conductrice magnétique (10) sur une plaque (60).

3. Structure de stator pour un moteur à courant continu sans balais selon la revendication 1, dans laquelle la partie de plaque polaire principale (11) de l'unique plaque conductrice magnétique (10) comprend en outre au moins un trou de montage (14) pour fixer l'unique plaque conductrice magnétique (10) sur une plaque (60).

4. Structure de stator pour un moteur à courant continu sans balais selon la revendication 1, dans laquelle la partie de plaque polaire principale (11) de l'unique plaque conductrice magnétique (10) comprend en outre un trou axial (12) pour le raccordement à un tube de métal (401) en vue de réaliser ainsi l'assemblage d'un rotor (50).

5. Structure de stator pour un moteur à courant continu sans balais selon la revendication 4, dans laquelle le trou axial (12) comprend une périphérie intérieure à partir de laquelle un axial tube (120) se projette, le tube axial (120) étant destiné à recevoir un roulement (40) pour permettre de ce fait la rotation du rotor (50).

6. Structure de stator pour un moteur à courant continu sans balais selon la revendication 1, dans laquelle l'unique plaque conductrice magnétique (10) comprend en outre une pluralité de bords extérieurs découpés (15) définis sur un bord extérieur annulaire en place pour augmenter de ce fait la symétrie structurelle globale de la périphérie extérieure de l'unique plaque conductrice magnétique (10).

7. Structure de stator pour un moteur à courant continu sans balais selon la revendication 1, dans laquelle chacun des pôles (13) comprend une section de col réduite (130) qui permet de produire de ce fait un champ magnétique irrégulier pour une mise en route facilitée.

8. Structure de stator pour un moteur à courant continu sans balais selon la revendication 1, dans laquelle chacun des pôles (13) présente un premier bord incliné (131) à une certaine inclinaison par rapport à un deuxième bord, le pôle (13) avec le premier bord incliné (131) étant destiné à produire un champ magnétique irrégulier pour une mise en route facilitée.

9. Structure de stator pour un moteur à courant continu sans balais selon la revendication 8, dans laquelle le deuxième bord est un deuxième bord incliné (132) destiné à augmenter la totalité de la zone induite des pôles (13).

10. Structure de stator pour un moteur à courant continu sans balais selon la revendication 1, dans laquelle les pôles (13) comprennent une pluralité de pôles internes (13a) et une pluralité de pôles externes (13b) qui sont éloignés de façon équidistante les uns des autres sur deux cercles concentriques associés.

11. Structure de stator pour un moteur à courant continu sans balais selon la revendication 10, dans laquelle les pôles internes et externes (13a, 13b) sont disposés d'une façon décalée.

12. Structure de stator pour un moteur à courant continu sans balais selon la revendication 10, dans laquelle chacun des pôles internes (13a) est aligné avec le pôle externe associé (13b) sur une ligne radiale commune.

13. Structure de stator pour un moteur à courant continu sans balais selon la revendication 1, dans laquelle le pôle (13) est une face polaire axiale (13") qui est courbée perpendiculairement à un bras polaire associé (13') de façon à faire face à un aimant permanent axial (51) d'un rotor (50) qui est induit avec un champ magnétique axial produit par les pôles (13") du stator afin de produire une force de répulsion pour entraîner le rotor 50.

14. Structure de stator pour un moteur à courant continu sans balais selon la revendication 1, dans laquelle la bobine (20) est disposée au niveau d'une périphérie intérieure des faces externes des pôles (13).

15. Structure de stator pour un moteur à courant continu sans balais selon la revendication 1, dans laquelle la bobine (20) est disposée au niveau d'une périphérie extérieure des faces externes des pôles (13).
